# EUROPÄISCHE PATENTANMELDUNG

(11) **EP 4 070 942 A1**
(43) Veröffentlichungstag der Anmeldung: **12.10.2022**
(21) Anmeldenummer: 21166942.9
(22) Anmeldetag: 06.04.2021
(51) Int. Cl.: B30B 11/00

(54) **VERFAHREN ZUM ERSTELLEN UND VERIFIZIEREN EINES PROGRAMMS ZUM STEUERN DER KOMPONENTEN EINER MEHRPLATTEN-PULVERPRESSE UNTER VERWENDUNG EINER NUMERISCHEN STEUERUNG**

(71) Anmelder: Osterwalder AG, 3250 Lyss (CH)
(72) Erfinder: Peter, KUNZ, 2558 Aegerten (DE); Reto, KÜHNI, 3075 Rüfenacht (DE)
(74) Vertreter: BOVARD AG

(57) **Zusammenfassung**

Mehrplatten-Pulverpresse (100) zur Herstellung eines masshaltigen Presslings aus einem verpressbaren Material, einfüllbar in eine Matrize (2), mit einer Stempeleinrichtung (3), umfassend eine Vielzahl in axialer Richtung relativ zueinander verstellbarer Stempel (6) und Komponenten, welche relativ zu einem Pressenteil verstellbar ist, einer Antriebseinheit zum Verstellen der Stempeleinrichtung (3) und/oder der relativ zueinander verstellbaren Stempel (6) und Komponenten in und/oder entgegen einer Pressrichtung, und eine numerische Steuereinrichtung, die eingerichtet und programmierbar ist, um gemäss eines Steuerprogramms einen Bewegungsablauf der Stempeleinrichtung und/oder der relativ zueinander verstellbaren Stempel und Komponenten zu steuern. Die Mehrplatten-Pulverpresse (100) weist ein Steuerbefehlseingabeelement zur Eingabe von Steuerungsparametern und ein Anzeigeelement auf, um die Stempeleinrichtung (3) und/oder die relativ zueinander verstellbaren Stempel (6) und Komponenten sowie Bewegungsabläufe auf grafische Weise darzustellen. Ferner wird ein Verfahren zur Steuerung der Mehrplatten-Pulverpresse (100) vorgesehen.

## Beschreibung

### Technisches Gebiet der Erfindung

Die vorliegende Erfindung bezieht sich auf ein Verfahren zum Erstellen und Verifizieren eines Programms zum Steuern von Komponenten einer Mehrplatten-Pulverpresse unter Verwendung einer numerischen Steuerung. Insbesondere verwendet die numerische Steuerung einer als Mehrplatten-Pulverpresse ausgebildeten Werkzeugmaschine eine Bearbeitungssoftware, die dann zur Ausführung an die Mehrplatten-Werkzeugmaschine übertragen wird. Darüber hinaus bezieht sich die vorliegende Erfindung auch auf eine Vorrichtung zum Implementieren dieses Verfahrens sowie eine digitale Steuerung.

### Stand der Technik

Es ist allgemein bekannt, dass moderne Werkzeugmaschinen mit einer numerischen Steuerung (NC) gesteuert werden. Bisher ist für hydraulische oder mechanische Pulverpressen eine CNC-Programmierung zur parallelen Steuerung einer Vielzahl von steuerbaren Werkzeugeinrichtungen, basierend auf einen Ablaufplan für einen Pressenhub bei einem Pressenzyklus, zwar bekannt und aber noch zu verbessern. Insbesondere bereiten beim Pressen auftretende Effekte und die komplexen Bewegungsabläufe der einzelnen Achsen zueinander Probleme bei der Programmierung.

Generell umfassen Pulverpressen zur Herstellung masshaltiger Presslinge aus einem verpressbaren Material ein Pressengestell, eine Matrize bzw. eine Matrizenanordnung mit einer Matrizenöffnung, welche einen Formhohlraum definiert, mindestens einen Oberstempel bzw. eine obere Stempelanordnung und/oder mindestens einen Unterstempel bzw. eine untere Stempelanordnung und Verstellantriebe bzw. Antriebssysteme für Ober- und/oder Unterstempel und/oder die Matrize, welche entlang von Führungen geführt sind. Stempel und Matrize sind relativ zueinander entlang einer Pressen-Hubachse bewegbar und gegeneinander pressbar. Neben einer linearen Bewegung kann es möglich sein, dass einzelne oder mehrere Achsen bzw. Stempel und/oder Matrize eine Rotationsbewegung synchron zur Hubbewegung ausführen. Dies ist beispielsweise bei der Herstellung von schrägverzahnten Presslingen vorgesehen. Pulverpressen können in unterschiedliche Typen eingeteilt sein, beispielsweise hinsichtlich ihrer Antriebssystem, d.h. in Hydraulik-, Elektro und Hybridpressen. Ferner sind auch Keramik- und/oder Metallpulverpressen bekannt, bei welchen senkrecht zu einer Hauptpressrichtung eine Querstempelanordnung zum Pressen und/oder Formen des Presslings senkrecht zur Verdichtungsachse angeordnet ist.

Bei der Herstellung eines mehrstufigen Presslings ist für nahezu jede Bauteilhöhe eine unabhängig bewegliche sogenannte Werkzeugebene erforderlich, auf weiche werkzeugspezifische Elemente zu einem Werkzeug aufgebaut sein können. Stempel werden auch als Werkzeuge bezeichnet, welche z.B. mit einer definierten Geschwindigkeit gesteuert, insbesondere geregelt linear und rotativ bewegt werden und eine gesteuerte, insbesondere geregelte Kraft aufbringen, um aus Pulver oder Granulat einen Presskörper auf ein vorgegebenes Presskörpermass zu verpressen. Der Stempel bzw. das Werkzeug ist an einem Stempel- bzw. Werkzeugträger angeordnet. Diese Träger können als Platten oder auch als Töpfe ausgebildet sein und können geführt relativ zu einem Grundkörper oder einer Grundplatte in der Pulverpresse direkt oder mittels Adaptoren von dem Antriebssystem bewegt werden, wobei die einzelnen Stempel relativ zueinander mit unterschiedlichen Geschwindigkeiten und/oder Hubstrecken bzw. Hubwegen bewegt werden. Die Bewegungsstrecken der einzelnen Stempel und diese verstellende Komponenten werden dabei auch als Achsen bezeichnet. Ferner sind in Pulverpressen, insbesondere in hydraulischen Pulverpressen, Abstützvorrichtungen vorgesehen, welche die Stempel in Pressendstellung relativ zu dem Grundkörper abstützen. Hierfür können als mechanische Festanschläge ausgebildete Anschläge vorgesehen sein, welche relativ zu dem Grundkörper bzw. einer Grundplatte einstellbar und eingerichtet sind, um eine Presskraft in Pressendstellung zumindest teilweise in den Grundkörper oder Grundplatte abzuleiten. Ferner umfassen heutige Presseinrichtungen Messsysteme mit Sensoren, beispielsweise zur Bestimmung von Positionen der Werkzeuge.

Der in mehrere Prozessstufen unterteilbare Pressvorgang zum Herstellen eines mehrstufigen Presslings umfasst Füllen des verpressbaren Materials in die Matrize, in welche beispielsweise bereits die Vielzahl von unteren Presswerkzeugen eingeführt und zueinander vorpositioniert sind. Dabei bestimmen die auch als Füllposition bezeichneten Positionen der Vielzahl von Unterstempeln die in die Matrize einfüllbare Füllmenge des verpressbaren Materials. Anschliessend folgt eine als Pulvertransfer bezeichnete Stufe, wobei durch eine individuelle Stempelbewegung der in die Matrize eingefahrenen oberen und/oder unteren Stempel das eingefüllte Pulver ohne Verdichtung verschoben wird, bis eine zu erreichende unverpresste Teilekontur des Presslings gleichmässig und derart ausgefüllt ist, dass der Pressling eine gleichmässige Dichteverteilung aufweist. Der eigentliche Pressprozess erfolgt unter Berücksichtigung von Pressparametern wie Zeit, Weg und Kraft, wobei die Vielzahl der Presswerkzeuge in ihre Pressendposition gefahren werden. Anschliessend folgen noch die Schritte zum Entspannen, Abziehen der Presswerkzeuge und zum Freilegen des Presslings.

Für eine Standardisierung, Automatisierung und/oder Vereinfachung beim systematischen Abarbeiten von Prozessstufen bei der Herstellung eines Produkts am Beispiel eines gestuften komplexen Presslings in einer Mehrplatten-Pulverpresse besteht der Bedarf einer computergesteuerten Unterstützung eines Bedieners mittels eines Steuerprogramms. Insbesondere da bei bekannten Steuersystemen für einzelne Werkzeuge individuelle Einstellungen durch einen Bediener einzugeben sind.

Zur Erstellung und Verifizierung eines Steuerprogramms für eine Presseneinrichtung ist bekannt, einen ersten Hub bzw. Probe-Hub durchzuführen, um festzustellen, ob die Programmierung im maschinenlesbaren Programmcode korrekt erfolgt ist. Eine Nachkorrektur während eines solchen Probe-Hubs ist oftmals nicht möglich, so dass es auch zu Werkzeugbrüchen kommen kann und mehrere Probe-Hübe nach vorhergehenden Korrekturen erforderlich sind.

Aus EP 1 439 949 ist eine Keramik- oder Metallpulverpresse bekannt, welche eine spezielle Software für die Simulation eines Probe-Hubs aufweist, um somit Kollisionen und Fehler in dem codierten Programm erkennen zu können. Eine derartige Software ist teuer und die Simulation kann den gesamten Prozessablauf stark verlangsamen. Die Simulation basiert auf einem Ablaufplan für einen Pressenhub eines Presszyklus, wobei Zielwerte bzw. Sollwerte der Parameter der Werkzeugeinrichtungen bestimmt und ein codiertes Steuerprogramm erstellt wird, welches nachfolgend anhand einer auf einer Rechnereinrichtung ablaufenden Simulation überprüft wird.

Aus DE 10 2010 044 688 ist für eine Metall- oder Keramikpulverpresse oder ein Pressenwerkzeug einer solchen Presse mit einer Stempeleinrichtung und einem als Spindelantrieb ausgebildeten Antriebssystem ein Steuerverfahren bekannt, wobei eine Steuereinrichtung nach Programmierung von Steuerparametern einen ersten «Probe-Hub» simuliert, welcher unterbrechenbar ist und welcher mittels einer manuellen Steuerkomponente schrittweise ansteuerbar und verstellbar ist, die in Verbindung zu der Steuereinrichtung ausgelegt und programmierbar ist. Die manuelle Steuerkomponente kann ein pro Druck ein Verstell- oder Steuersignal ausgebender elektrischer Taster oder ein Handrad sein, wobei von der Steuereinrichtung durch die Signale eine schrittweise Fortbewegung von verstellbaren Komponenten der Presse ausgelöst bzw. angesteuert wird.

Die Aufgabe der vorliegenden Erfindung besteht darin, eine Mehrplatten-Pulverpresse und ein Verfahren zur Steuerung, insbesondere Regelung, derselben bereitzustellen, wobei ein Einstellen und ein Verifizieren von Steuerungsparameter bzw. Regelparametern und eines erstellbaren Steuerprogramms auf eine einfache und sichere Art möglich ist. Insbesondere sollte dies möglich sein, ohne dass hierfür der laufende Pressvorgang unterbrochen werden muss. Demnach können auch Nachjustierungen aufgrund thermischer Effekte weitgehend vermieden werden. Ferner sollte eine einfache Bedienbarkeit und eine Verbindung zu übergeordneten Unternehmens- und Produktionssystemen bereitgestellt sein. Eine kundenspezifische Anpassung und universelle Erweiterung des Verfahrens auf unterschiedliche Typen von Pulverpressen sollte gewährt sein, ebenso wie Verwaltung, Dokumentation und Visualisierung von Auftrags-, Prozess- und Maschinendaten.

### Zusammenfassung der Erfindung

Die vorliegende Erfindung bietet daher eine Mehrplatten-Pulverpresse mit einer einfachen und effizienten Möglichkeit, Programme zur Steuerung der Komponenten der Mehrplatten-Pulverpresse unter Verwendung einer numerischen Steuereinrichtung zu erstellen, die vor der Ausführung durch die Steuereinrichtung auf ihre Genauigkeit und Durchführbarkeit digital überprüft werden und die direkt via Eingabemitteln modifizierbar sind. Dies kann vorteilhaft während eines laufenden Betriebs der Presse erfolgen, wobei einzelne Parameter verändert und unmittelbar für einen nächsten Hub übernommen werden können, so dass eine stabile Produktion gewährleistet werden kann. Auf diese Weise können kurze Stillstandzeiten der Mehrplatten-Pulverpresse vermieden werden, so dass auch thermische Einflüsse durch eine im Stillstand eintretende Temperaturänderung der Stempel etc. vermieden werden können. Darüber hinaus ist es nicht erforderlich, einen kontinuierlichen Pulverfluss für eine Übertragung des Steuerprogramms zu unterbrechen.

Zu diesem Zweck betrifft die vorliegende Erfindung eine Mehrplatten-Pulverpresse mit einer numerischen Steuereinrichtung gemäss Anspruch 1 und ein Verfahren zum Steuern einer derartigen Mehrplatten-Pulverpresse gemäss Anspruch 6.

Demnach bezieht sich die Erfindung auf eine Mehrplatten-Pulverpresse zur Herstellung eines masshaltigen Presslings aus einem verpressbaren Material, einfüllbar in eine Matrize, mit einer Stempeleinrichtung, umfassend eine Vielzahl in axialer Richtung und rotativ relativ zueinander verstellbarer Stempel und Komponenten, welche relativ zu einem Pressenteil verstellbar sind, mit einer Antriebseinheit zum Verstellen der Stempeleinrichtung und/oder der relativ zueinander verstellbaren Stempel und Komponenten in und/oder entgegen einer Pressrichtung, und eine numerische Steuereinrichtung, die eingerichtet und programmierbar ist, um gemäss eines Steuerprogramms einen Bewegungsablauf der Stempeleinrichtung und/oder der relativ zueinander verstellbaren Stempel und Komponenten zu steuern, insbesondere zu regeln. Ferner sind ein Steuerbefehlseingabeelement zur Eingabe von Steuerungsparametern und ein Anzeigeelement vorgesehen, um die Stempeleinrichtung und/oder die relativ zueinander verstellbaren Stempel und Komponenten sowie Bewegungsabläufe auf grafische Weise darzustellen.

Im Sinne der Erfindung umfasst eine Mehrplatten-Pulverpresse eine Stempeleinrichtung, welche eine Vielzahl von steuerbaren bzw. regelbaren Komponenten umfasst. Als steuerbare Komponenten werden sowohl verstellbare Stempel bzw. Werkzeuge als auch relativ zueinander verstellbare Komponenten wie Stempelträger, einstellbare Festanschläge und/oder eine Matrizenanordnung verstanden. Vorgesehen ist zumindest eine Stempeleinrichtung mit einer unterhalb und/oder oberhalb einer Matrizenanordnung angeordneten Vielzahl von Werkzeugen bzw. Stempeln und Komponenten, welche in axialer und allenfalls in rotativer Richtung relativ zueinander mittels eines Antriebssystems verstellbar sind, so dass ein in die Matrizenanordnung eingefülltes pulver- und/oder granulatförmiges Material zu einem masshaltigen insbesondere mehrstufigen Pressling verpressbar ist. Ferner ist eine numerische Steuereinrichtung vorgesehen, welche eingerichtet und programmierbar ist. Vorgesehen sind ein Steuerbefehlseingabeelement, um eine Möglichkeit vorzusehen, dass ein Benutzer durch Eingabe von Steuerungsparametern direkten Einfluss nimmt auf die Erstellung eines Steuerprogramms, wobei eine einfache und verständliche grafische Anzeige an einem Anzeigeelement vorgesehen ist. Die Eingaben beziehen sich beispielsweise auf die Anzahl und geometrische Form der verstellbaren Stempel, deren Anordnung, den Stempelweg bzw. die Hubstrecke der einzelnen Stempel, sowie Kraft-Weg-Verläufe umfasster Achsen. Ferner können Daten bezüglich des Pressprozesses, von Werkzeugen und/oder Produktparametern wie physikalische Eigenschaften des verpressbaren Materials, Toleranzen und/oder eine angestrebte Dichteverteilung im herzustellenden Pressling eingegeben oder aus einem zugeordneten Datenspeicher eingelesen werden.

Gemäss einer Ausführungsform der Erfindung ist eine Schnittstelle zur Interaktion mit einem Benutzer einer Mehrplatten-Pulverpresse in Form eines Bildschirms eines Computers, eines Touchscreen-Tablets oder sogar eines Smartphones vorgesehen. Ein dabei realisiertes Bedienkonzept wird durch eine Vielzahl von Bedienbildern, Dialogen und Meldungen unterstützt. Mittels der Schnittstelle zur Interaktion mit dem Benutzer kann dieser Befehle in das zu erstellende Steuerprogramm einfügen, Befehle aus dem Steuerprogramm löschen oder eine andere Anpassung des Steuerprogramms vornehmen.

Gemäss einer Ausführungsform der Erfindung ist ferner ein Element zur drahtlosen Übertragung des erstellten Steuerprogramms an die numerische Steuereinrichtung vorgesehen. Die numerische Steuereinrichtung ist eingerichtet, um das Steuerprogramm zum Steuern, insbesondere zum Regeln, der Stempeleinrichtung der Mehrplatten-Pulverpresse und/oder der relativ zueinander verstellbaren Stempel und Komponenten auszuführen.

Die vorgeschlagene Lösung zeichnet sich durch eine Definition einer Reihe von Steuerungsparametern einschliesslich definierter Bewegungen der steuerbaren Komponenten der Mehrplatten-Pulverpresse aus, die für den Pressvorgang bzw. Presszyklus erforderlich sind, und durch die Erzeugung eines Steuerprogramms, welches eine Reihe von Befehlen umfasst, wobei jeder Befehl einer Bewegung der definierten Komponenten der Mehrplatten-Pulverpresse entspricht, die Befehle des generierten Steuerprogramms analysiert und Berechnungen der Bewegungen der Komponenten der Mehrplatten-Pulverpresse durchgeführt werden, um die Parameter und Bewegungsabfolgen beim Pressvorgang zu bestimmen. Dann und vor der Übertragung des Steuerprogramms an die numerische Steuereinrichtung werden Parameter und eine Abfolge der Bewegungsabläufe der steuerbaren Komponenten grafisch in Echtzeit in einer realitätskonformen Weise angezeigt.

Gemäss der Erfindung wird ein Verfahren zur Steuerung der vorhergehend beschriebenen Mehrplatten-Pulverpresse vorgesehen, welches unter anderem eine Analyse der Befehle des Steuerprogramms, eine Durchführung der Berechnung der Steuerungsparameter und eine Bewegung der steuerbaren Komponenten der Mehrplatten-Pulverpresse sowie eine Anzeige der Abfolge der Bewegungsabläufe des Pressvorgangs, insbesondere unterteilt pro umfasster Prozessstufe des mehrstufigen Prozessablaufs, in Echtzeit realisiert. Somit ist eine erste Überprüfung eines festgelegten Pressablaufs und der entsprechend durchgeführten Programmierung möglich. Darüber hinaus erfolgt die Anzeige des Pressablaufs unter Verwendung einer einfach verständlichen Grafik, welche eine realitätsgetreue, aber abstrahierte Darstellung der Stempel, Stempelträger, Festanschläge und weiterer verstellbarer Komponenten ist.

In einer Ausführungsform des Verfahrens ist es demnach dem Benutzer der Mehrplatten-Pulverpresse bzw. einem Programmierer möglich, das Steuerprogramm anhand der Wege der Werkzeuge, d.h. der Vielzahl von Unterstempeln und der Vielzahl von Oberstempeln und anderer Komponenten, während der einzelnen Prozessstufen des Pressvorgangs leicht zu überprüfen und Kollisionen einzelner Komponenten miteinander und Fehler, die die Ausführung des Steuerprogramms negativ beeinflussen können, sofort zu erkennen und dies auch ohne Verwendung einer zusätzlichen Software für eine Plausibilitätskontrolle oder eine Simulation. Da die Bewegungen der Werkzeuge in Echtzeit berechnet und dann sofort grafisch angezeigt werden, kann die Überprüfung des Steuerprogramms nahezu parallel zur Programmierung durchgeführt werden.

Es ist vorgesehen, dass bestimmte Zuordnungen von dem Benutzer eingegeben und diesem in einer einfachen grafischen Anzeige angezeigt werden. So können über eine vorbereitete Maske Angaben zu den unteren Werkzeugen, d.h. der Vielzahl von Unterstempeln und/oder den oberen Werkzeugen, d.h. der Vielzahl von Oberstempeln, sowie zu Komponenten wie beispielsweise Festanschlägen eingegeben werden. Dabei können die Angaben neben der Anzahl und Anordnung auch die Form der Stempel umfassen, d.h. ob sie einer flache oder eine gestufte Stempeloberfläche aufweisen und welche Stempel und/oder andere Komponenten zueinander benachbart angeordnet sind.

Ferner können Eingaben zu dem herzustellenden Pressling gemacht werden, welche sich insbesondere auf die zwischen gegenüberliegenden Stempeln zu erzielenden Pressteilhöhen beziehen. Grafisch darstellbar ist der Hubweg individueller Stempel, insbesondere in Bezug zu einer zu definierenden Bezugslinie. Durch farblich abgesetzte Werkzeuge wird eine klare Darstellung der Werkzeugeigenschaften angezeigt.

Im Rahmen einer Simulation bietet die grafische Darstellung der Anordnung der einzelnen Werkzeuge und deren durchfahrbare Wege während der aufeinander folgenden Prozessstufen des Pressvorgangs ein optimales Instrument der Überwachung. Mittels einer Darstellung der zeitlichen Abläufe eines Pressvorgangs zu Herstellung eines masshaltigen Presslings in der einfach zu erfassenden Simulation können durch direkten Zugriff von Seiten des Benutzers auch während des laufenden Pressvorgangs Korrekturen an den Einstellungen vorgenommen werden, so dass vor der Durchführung des Pressvorgangs Unkorrektheiten beseitigt und/oder Einstellungen hin zu einer Optimierung vorgenommen werden können.

Die grafische Anzeige an dem Anzeigeelement bedient sich einer einfachen Darstellung der Vielzahl der steuerbaren Komponenten, z.B. der Stempel, und der umfassten Matrize, beispielsweise sind die Stempel als vertikale Balken dargestellt, welche sich in Echtzeit entsprechend der realen Stempel bewegen. Das Programm bietet die Möglichkeit entsprechend der Grösse des zu erzeugenden Teils bzw. Presslings eine massstäblich vergrösserte und/oder verkleinerte Darstellung anzuzeigen, um alle Stempel, weitere Komponenten und deren Bewegungen in einer Darstellung zu erfassen.

Wenn das Steuerprogramm zur Zufriedenheit generiert ist, kann es an die numerische Steuereinrichtung übertragen werden, die es ausführt, um die steuerbaren Komponenten der Mehrplatten-Pulverpresse mit dem Ziel der Herstellung eines masshaltigen insbesondere mehrstufigen Presslings zu steuern, insbesondere zu regeln. Hierbei kann das generierte Steuerprogramm auch schon während des Pressvorgangs übertragen werden, so dass kein zeitlicher Unterbruch den Pressvorgang negativ beeinflussen kann.

Ausgangspunkt des grafisch darstellbaren Prozessablaufs ist ein zum Startzeitpunkt vorliegender Grundzustand, in welchem sich insbesondere die mehreren Stempel ausserhalb der Matrize befinden.

Um eine Bezugslinie für die beteiligten Werkzeuge bzw. Stempel zu definieren, kann in einem Schritt ein Nullpunkt für die Werkzeuge bzw. Stempel relativ zu ihrem Anschlag festgelegt werden. Beispielsweise wird die Vielzahl der Unterstempel relativ zur Matrize positioniert und automatisch der Nullpunkt gesetzt, wenn ein Schleppabstand kleiner gleich einem einstellbarem Wert ist. Bei einer Positionierung wird unter einem Schleppabstand diejenige Differenz zwischen einem Sollwert als Stellgrösse und einem rückgemeldeten Istwert verstanden. Hierbei sind weitere Korrekturen möglich, falls eine Abweichung einer realen Werkzeug- bzw. Stempellänge von der theoretischen vorliegt. Eine Alternative für die Setzung des Nullpunkts ist, ausgehend von einem definierten Nullpunkt eines der Werkzeuge, beispielsweise eines äussersten Werkzeugs, dass der Nullpunkt der Matrize berechnet wird. Basierend auf der Berechnung des Nullpunktes der Matrize, werden die Positionen von Stempelträgern unter Berücksichtigung der realen Stempellänge automatisch definiert.

Nachdem Prozessparameter und die Bezugslinie bestimmt sind, kann in einem Programmschritt «Simulation» die Prozessstufen eines Pressvorgangs grafisch dargestellt werden. Die Simulation basiert auf dem Steuerprogramm und einer daraus resultierenden Berechnung der Bewegungsabläufe. Vorzugsweise wird der Prozessvorgang in Prozessstufen unterteilt, welche einzeln darstellbar sind, insbesondere unterteilt in Startposition, Befüllung, Einführung, Pulververteilung zunächst ohne Presskrafteinwirkung, Verpressung, Presskraftentlastung, Freilegen und Ende. In der grafischen Darstellung der Startposition sind die einzelnen Werkzeuge einer unteren Stempeleinrichtung in die Matrize eingeführt und bestimmen mit der Matrize die Füllhöhe bzw. das Füllvolumen des einzufüllenden, zu verpressende Materials. Anschliessend werden positionierte Oberstempel angezeigt, wobei eine gewisse Auf- und Abbewegung der Stempel simuliert werden kann, um so eine gleichmässige Verteilung des eingefüllten, zu verpressenden Materials in die gewünschte Geometrie und damit eine gleichmässige Dichte des Presslings zu erzielen. Diese Prozessstufe wird auch mit Pulvertransfer umschrieben. Nach dem eigentlichen Pressprozess schliessen sich Prozessstufen wie Kraftentlastung bzw. Kraftabbau sowie Abziehen der einzelnen Werkzeuge und ein bevorzugt stufenweises Freilegen des Presslings an, wobei die Werkzeuge einschliesslich der Matrize in die Grundstellung zurückfahren. Da die Bewegung der einzelnen Komponenten in Echtzeit berechnet und direkt angezeigt wird, kann mittels eines direkten Zugriffs des Benutzers über das Steuerbefehlseingabeelement auf das Steuerprogramm in den einzelnen Prozessstufen eine nahezu parallele Korrektur durchgeführt werden.

Gemäss einer Ausführungsform umfasst das Verfahren zur Steuerung, insbesondere zur Regelung, eine Optimierung des Pressvorgangs, da grundsätzlich der Bedarf nach exakter Formkontur und Masshaltigkeit beim Pressen besteht, um Nachbearbeitungsschritte am hergestellten Pressling weitgehend zu reduzieren oder vorzugsweise zu vermeiden. Hierbei unterstützt die grafische Simulation gemäss der Erfindung den Benutzer, beispielsweise beim Erkennen von Rissbildung und einer Vermeidung derselben.

Mittels leicht verständlicher und bedienbarer Programmierapplikationen können im Rahmen der Erfindung Ist-/Soll-Wert-Echtzeitanalysen, Fehleranzeigen sowie Diagnosefunktionen zur Verfügung gestellt werden. So kann der erzeugte Pressling vermessen werden, wobei vorteilhafterweise Referenzen frei wählbar sind. In einer grafischen Darstellung des Presslings können dann die Nominalwerte bzw. die Soll-Werte aus den hinterlegten Daten im Vergleich mit den bestimmten aktuellen Werten, den Ist-Werten, verglichen werden. Liegt eine nicht tolerierbare Abweichung der Soll- und Ist-Werte vor, kann mittels des Verfahrens eine Korrektur eingeleitet werden, welche eine Veränderung des Steuerprogramms und somit eine Veränderung an den Steuerungs- bzw. Regelparametern der verstellbaren Werkzeuge bewirkt. Eine Ausführungsform des Verfahrens sieht vor, dass die gemessenen Werte, d.h. die Ist-Werte, direkt ohne Umrechnung oder Angabe von Vorzeichen von dem Benutzer an dem Steuerungsbefehlseingabeelement eingegeben werden können, wobei diese automatisch korrekt in die Berechnung eingehen. Andere zu bestimmende Parameter sind Gewicht und/oder partielle Dichten des Presslings, welche in Zusammenhang mit einer neu zu bestimmenden Füllhöhe stehen und somit eine automatische oder manuelle Anpassung des Steuerprogramms veranlassen.

Gemäss einer Ausführungsform der Erfindung umfasst das Verfahren zum Überprüfen eines Programms zum Steuern bzw. zum Regeln einer Mehrplatten-Pulverpresse unter Verwendung einer numerischen Steuereinrichtung nach Analyse von Ist-/Soll-Werten und Berechnung zur Verifizierung von Korrekturwerten eine Anzeige zur grafischen Visualisierung, wie sich aufgrund veränderter Prozessparameter die Dichteverteilung in dem herzustellenden Pressling verändert. Insbesondere werden durch Farben oder unterscheidbaren Flächen angezeigt, ob die Dichte in dem Teilabschnitt zunimmt oder abnimmt und wie sie sich zum Grenzwert verhält. Zusätzlich kann auch noch die Richtung angezeigt werden, in welcher die Position individueller Werkzeuge verändert wird.

Ein Ausführungsbeispiel der Erfindung wird nachfolgend anhand von Zeichnungen näher erläutert. Es zeigen:
Figur 1 eine schematische vereinfachende Darstellung einer Mehrplatten-Pulverpresse mit einer Stempeleinrichtung und einer Matrizenanordnung;
Figur 2 schematisch ein Ablaufschema eines Verfahrens zur Herstellung eines masshaltigen Presslings in einer Mehrplatten-Pulverpresse gemäss Figur 1 ;
Figur 3 eine schematische Darstellung der Stempeleinrichtung und der Matrizenanordnung während einzelner Verfahrensstufen bei der Herstellung eines masshaltigen Presslings in der Mehrplatten-Pulverpresse, welche gemäss des erfindungsgemässen Verfahrens angezeigt werden;
Figur 4 schematisch ein Ablaufdiagramm des erfindungsgemässen Verfahrens zur Steuerung einer Mehrplatten-Pulverpresse.

### Detaillierte Beschreibung einer bevorzugten Ausführungsform

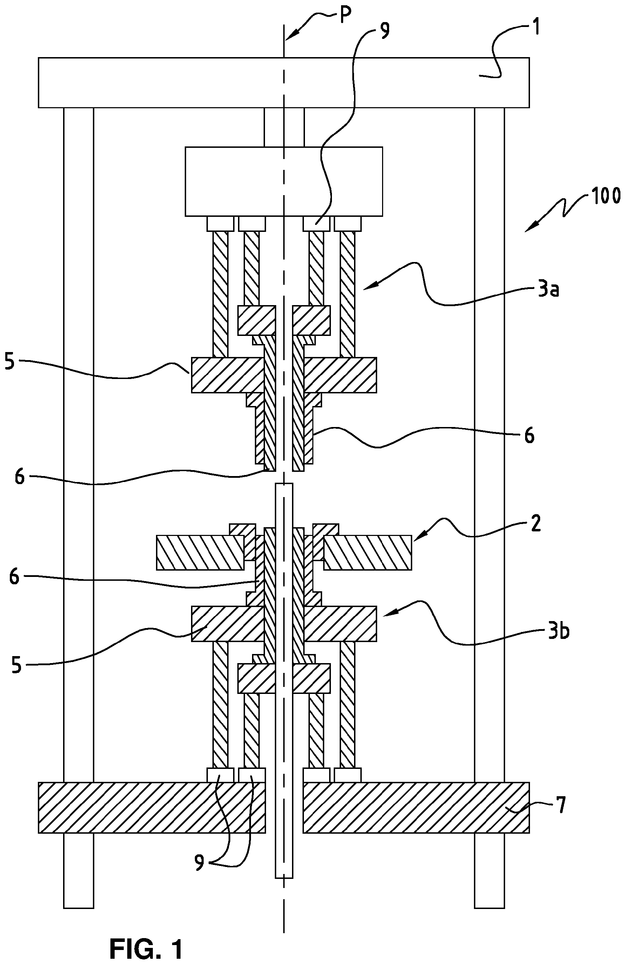

In Figur 1 ist schematisch der Aufbau einer Mehrplatten-Pulverpresse 100 dargestellt, welche eine Vielzahl von beweglichen Komponenten und Werkzeugen aufweist. In dieser schematischen Darstellung sind zur Vereinfachung Aktoren, z.B. elektrische Antriebe und/oder hydraulische Zylinder, zum Verstellen von Stempelanordnungen nicht gezeigt. Die Mehrplatten-Pulverpresse 100 weist ein Gestell oder Rahmenstruktur 1 auf mit einer oberen Stempelanordnung 3a, einer unteren Stempelanordnung 3b, zusammengefasst als Stempeleinrichtung 3 bezeichnet, und einer Matrizenanordnung 2. Die Stempelanordnungen 3a, 3b können eine Vielzahl von Stempelträgern 5 umfassen, welche beispielsweise an einer Grundplatte 7 beweglich gelagert sind, wobei an der Grundplatte 7 und auf einzelnen Stempelträgern 5 verstellbare Stempel 6 und Komponenten, beispielsweise verstellbare Festanschläge 9 bzw. andere bewegbare Elemente, abgestützt sind, welche zum Verpressen eines verpressbaren Materials entlang einer Pressachse P und/oder rotativ mittels eines Antriebssystems (nicht dargestellt) bewegt werden. Je nach Komplexität eines Werkzeugs sind eine Vielzahl von verstellbaren Komponenten des Werkzeugs relativ zueinander zu steuern.

Die Mehrplatten-Pulverpresse 100 umfasst eine nummerische Steuereinrichtung, die eingerichtet und programmierbar ist, um gemäss eines Steuerprogramms einen Bewegungsablauf der Stempeleinrichtung und/oder der relativ zueinander verstellbaren Stempel 6 und Komponenten zu steuern, insbesondere zu regeln. Ferner ist ein Steuerbefehlseingabeelement vorgesehen, mittels welchem Steuerungsparameter eingebbar sind und ein Anzeigeelement, um die Stempeleinrichtung 3 und/oder die relativ zueinander verstellbaren Stempel 6 und Komponenten sowie Bewegungsabläufe auf grafische Weise darzustellen.

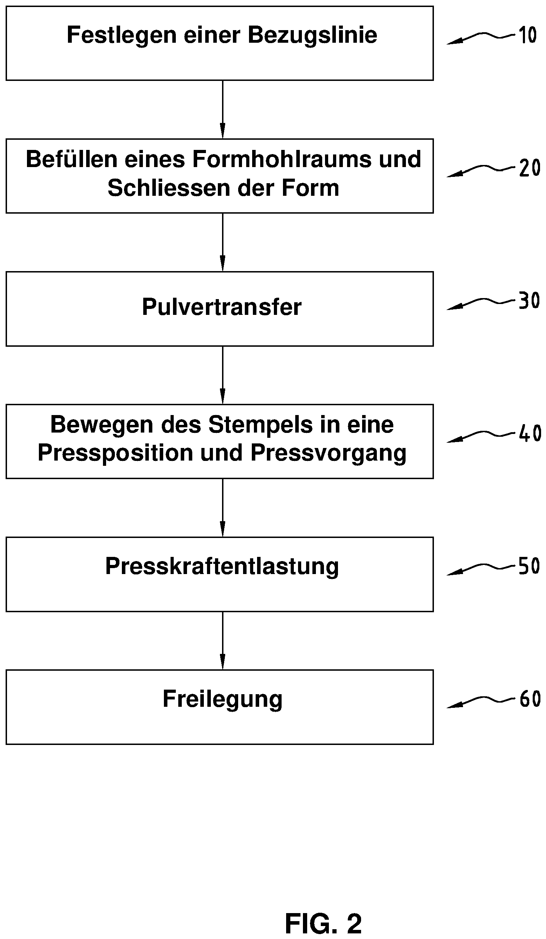

In Figur 2 ist der Prozessablauf zur Herstellung eines masshaltigen Presslings aus einem verpressbaren Material gezeigt, umfassend mehrere Stufen. Eine Stufe 10 umfasst ein Festlegen einer sogenannten Bezugslinie oder Nullpunkts für die bei dem Pressvorgang beteiligten Stempel 6, wobei dies einmal beim Einrichten zu erfolgen hat. Zur Festlegung der Bezugslinie kann beispielsweise jeder der Vielzahl von Unterstempeln 3a relativ zur Matrize 2 positioniert werden, wobei dann der Nullpunkt festgelegt wird, wenn eine Differenz zwischen einem zu bestimmenden und rückmeldbaren Istwert und einem vordefinierten Sollwert kleiner als ein vorbestimmbarer Wert ist. Dieser Wert wird auch als Schleppabstand bezeichnet. Praktisch kann dies durchgeführt werden, in dem jeder der Vielzahl der Unterstempel 3a, welche an ihren Anschlägen auf- bzw. anliegen, nach unten gefahren werden, bis der Schleppabstand beispielsweise 2 mm beträgt, so dass für diese Achse der Nullpunkt gesetzt ist.

Ist der jeweilige Nullpunkt bereits bekannt, dann kann jeder Stempel 3a, 3b auf seinen Nullpunkt bewegt werden und eventuell vorhandene Differenzen, z.B. Überstände, gemessen werden, welche zur Korrektur des Nullpunktes verwendet werden können. Dies vermeidet Fehler in dem Fall, indem die Stempellänge nicht dem theoretischen Mass entspricht und ermöglicht eine Einstellung der Stempelträger unter Berücksichtigung der tatsächlichen Stempellänge.

In einem nachfolgenden Schritt 20 fährt die untere Stempelanordnung 3a und die Matrizenanordnung 2 in eine Füllstellung, in welche eine Befüllung eines Formhohlraumes 14 mit dem verpressbaren Material erfolgt, und die obere Stempelanordnung 3b in eine Stellung, in der die Form geschlossen ist . In den befüllten Formhohlraum fahren dann in Stufe 30 die Stempelanordnungen 3a, 3b ein, ohne das eingefüllte Pulver zu verpressen. Vorzugsweise können die einzelnen Stempel 6 in einem gewissen Umfang auf und ab bewegt werden, so dass sich das Pulver gleichmässig und optimal für eine zu erzielende Dichteverteilung des Presslings verteilt. In dieser Stufe 30, auch als Pulvertransfer bezeichnet, erfolgt keine Beaufschlagung mit Presskraft.

In einer weiteren Stufe 40 werden dann die Stempel 6 in ihre Endpositionen mittels der Antriebssysteme der Mehrplatten-Pulverpresse 100 bewegt und das in dem Formhohlraum 14 befindliche Pulver gepresst, d.h. zu einem masshaltigen Pressling verdichtet, wobei auch eine gewisse Haltezeit eingehalten werden kann. Dann erfolgt in einer Stufe 50 eine Presskraftentlastung und anschliessend werden gemäss Stufe 60 die Matrizenanordnung 2 und/oder die jeweiligen Stempel 6 der Stempelanordnungen 3a, 3b verfahren, letztere vorzugsweise in einer festgelegten Reihenfolge, so dass der masshaltige Pressling nach und nach freigelegt wird. Hierbei gilt es Spannungen in dem Pressling durch koordiniertes Zurücksetzen zu vermeiden. Mit dem Freilegen des masshaltigen Presslings wird ein Presszyklus beendet.

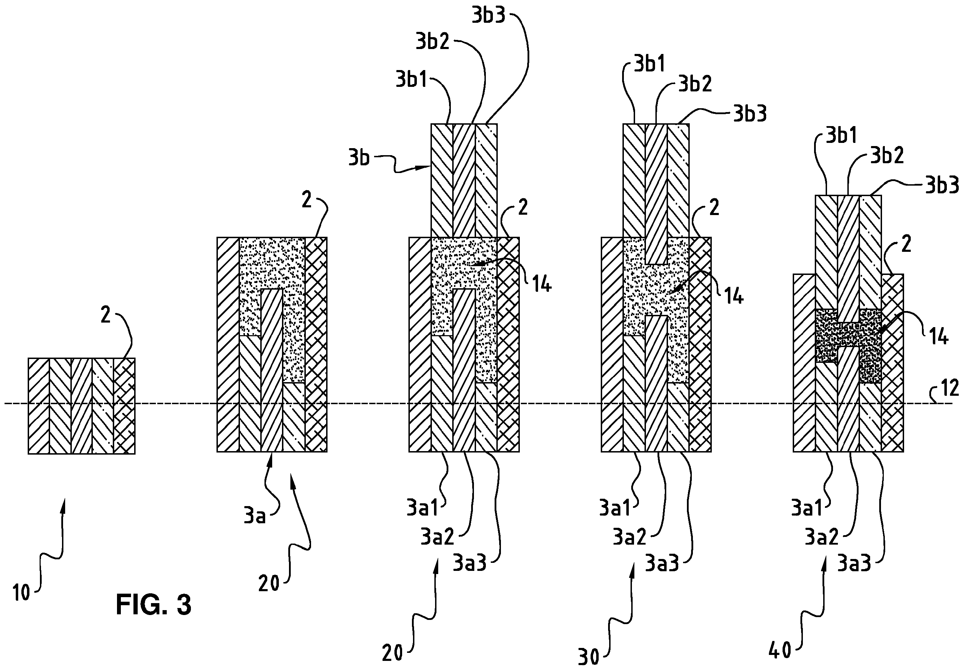

In Figur 3 werden schematisch lediglich die Verfahrensstufen 10, 20, 30 und 40 dargestellt, wie sie an einem Anzeigeelement der erfindungsgemässen Mehrplatten-Pulverpresse 100 einem Benutzer angezeigt werden können. Weitere Verfahrensstufen sind gemäss der Erfindung ebenfalls an dem Anzeigenelement darstellbar. An dem Anzeigeelement sind vereinfachend einzelne untere Stempel 3a1, 3a2, 3a3 der Unterstempelanordnung 3a und diesen gegenüberliegende obere Stempel 3b1, 3b2, 3b3 der Oberstempelanordnung 3b in einer gleichen Farbe dargestellt, angedeutet in Fig. 1 durch gleiche Schraffuren, sowie dadurch definierte Achsen x1, x2, x3 gezeigt. Die Matrizenanordnung 2 ist ebenfalls unterscheidbar. In der Stufe 10 ist die Bezugslinie bzw. der Nullpunkt 12 festgelegt worden und die jeweiligen unteren Stempel 3a1, 3a2, 3a3 sind in ihre Nullpunktslage relativ zur Bezugslinie 12 bewegt worden.

In Stufe 20 erfolgt das Einfüllen des zu verpressenden Materials in einen durch die untere Stempelanordnung 3a und die Matrize 2 geschaffenen Formhohlraum 14. So dann werden in der Stufe 20 die oberen Stempel 3b1, 3b2, 3b3 positioniert, so dass die Form geschlossen wird und in Stufe 30 durch Auf- und Abbewegung der Stempelanordnungen 3a, 3b das eingefüllte Pulver in dem Formhohlraum 14 gleichmässig und optimiert verteilt. Diese Vergleichmässigung des eingefüllten Pulvers findet ohne Beaufschlagung der Stempel 3a1, 3b1, 3a2, 3b2; 3b3, 3b3 mit Presskraft statt. Der eigentliche Pressvorgang erfolgt dann in Stufe 40.

Dem Benutzer kann an dem Anzeigeelement unterschiedliche Informationen, beispielsweise ob die Darstellung vergrössert oder verkleinert ist, klar und leicht verständlich angezeigt werden. Ferner kann der Benutzer über Elemente weitere Informationen aufrufen oder direkten Zugriff auf die Programmierung nehmen.

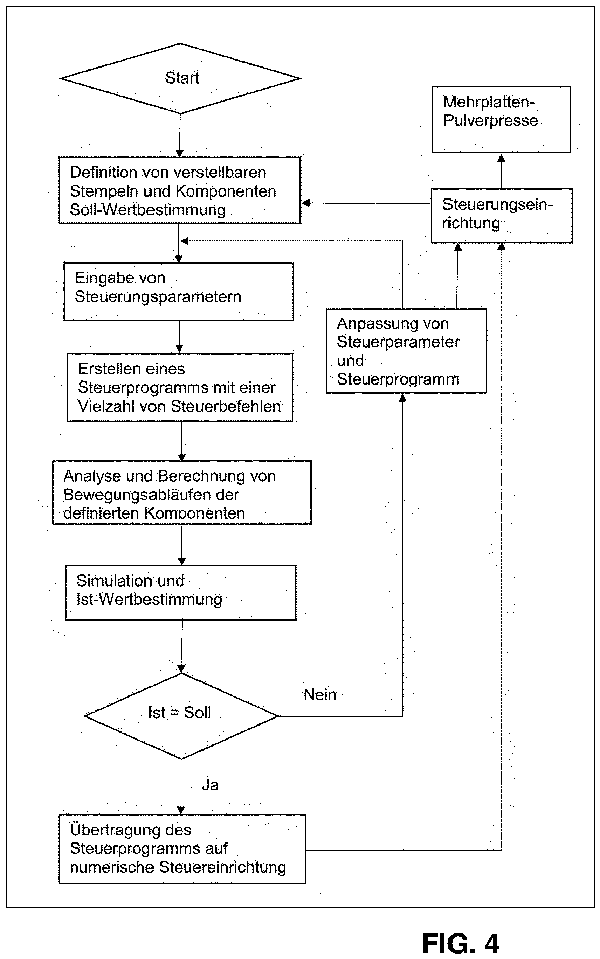

In Figur 4 wird schematisch ein Ablaufdiagramm dargestellt, welches das Verfahren zur Herstellung eines masshaltigen Presslings und der damit einhergehenden Programmierung zeigt. Hierbei umfasst ist ein Steuerprogramm, mit welchem eine erste Einstellung und Erzeugung des eigentlichen Steuerprogramms für den Pressenhub sowie eine Überwachung der dabei ablaufenden Funktionen beschrieben ist, wobei vorgesehen ist, dass Möglichkeiten zum Eingreifen in den Ablauf im Fall von Unkorrektheiten und/oder zur Optimierung vorhanden sind.

In einem ersten Schritt wird ein Ablaufplan erstellt und dieser in ein entsprechendes Steuerverfahren umgesetzt. Hierfür werden eine Anzahl von zueinander verstellbarer Stempel 6 und Komponenten, insbesondere eine Matrizenanordnung 2 und Festanschläge 9 umfassend, definiert, welche in einem auszuführenden Presszyklus in mehreren Prozessstufen zur Herstellung eines masshaltigen Presslings bewegt werden.

In einem folgenden Schritt werden Steuerungsparameter eingegeben. Dies kann direkt über ein Steuerbefehlseingabeelement durch einen Benutzer erfolgen oder aus einem zugeordneten Datenspeicher eingelesen werden. Zu den Steuerungsparametern zählen beispielsweise Anzahl und geometrische Form der verstellbaren Stempel 6, deren Anordnung, deren Stempelweg bzw. Hubstrecke oder Hubweg, Kraft-Wege-Verläufe der umfassten Achsen. Ferner können Daten bzgl. des Pressprozesses, der Werkzeuge und/oder Produktparameter wie physikalische Eigenschaften des verpressbaren Materials, Toleranzen und/oder eine zu erreichende Dichteverteilung im herzustellenden Pressling berücksichtigt und über das Steuerbefehlseingabeelement eingegeben werden. Die Eingabe kann insbesondere dadurch unterstützt werden, dass eine Vielzahl von Bedienbildern, Dialogen und/oder Meldungen einem Benutzer angezeigt werden.

In einem folgenden Schritt wird ein Steuerprogramm generiert, welches eine Reihe von Steuerbefehlen umfasst, wobei jeder Steuerbefehl einer Bewegung der definierten Komponenten entspricht. Bei der Erstellung des Steuerprogramms wird in zweckmässiger Weise auf die eingegebenen Steuerungsparameter zurückgegriffen.

In einem weiteren Schritt erfolgt eine Analyse der Steuerbefehle des generierten Steuerprogramms sowie eine Berechnung der Bewegung der definierten Komponenten, um die stattfindenden Bewegungsabläufe in den einzelnen Prozessstufen der definierten Komponenten zu bestimmen. Diese Analyse und Berechnung der Bewegung kann als eine Art Simulation betrachtet werden, welche vorteilhaft zur Veranschaulichung und zur visuellen Überwachung der einzelnen Bewegungsabläufe in den einzelnen Prozessstufen auf einem Anzeigeelement, beispielsweise einem Bildschirm, für einen Benutzer dargestellt wird. Demnach kann das generierte Steuerprogramm für eine Simulation genutzt werden. Hierbei kann schon in gewissem Umfang eine Plausibilitätsprüfung erfolgen, welche ein Überschreiten von definierbaren Grenzwerten bei den Bewegungsabläufen verhindert.

Gemäss der Erfindung findet diese Analyse der Steuerbefehle, die Realisierung der Berechnung der Bewegung der definierten Komponenten und die grafische Anzeige der Bewegungsabläufe in Echtzeit statt und in einer realitätsgenauen schematischen Darstellung.

Vorzugsweise kann gemäss dem generierten Steuerprogramm eine Probepressung durchgeführt werden, um hierbei einen Probe-Pressling herzustellen. Es werden die durch das generierte Steuerprogramm berechneten einzelnen Bewegungen simuliert, wobei die an dem derart hergestellten Probe-Pressling zu messende Ergebnisse als Ist-Werte ermittelbar sind. Bei der Ermittlung von Ist-Werten am Probe-Pressling können Referenzen frei gewählt werden und die Eingabe der Ist-Werte kann einfach ohne Berücksichtigung der Vorzeichen und einer eventuellen Umrechnung der Grössenordnung erfolgen. Diese Ist-Werte können mit zugeordneten vorher definierten Soll-Werten verglichen werden, wobei auch hierfür eine grafische Unterstützung möglich ist. Liegen die ermittelten Ist-Werte ausserhalb eines Toleranzbereichs der zugeordneten Soll-Werte, so wird eine Anpassung des Steuerprogramms bzw. der Steuerungsparameter generiert. Insbesondere wird an dem Probe-Pressling als Ist-Wert eine Dichteverteilung bestimmt, welche in einem direkten Zusammenhang mit einer Füllhöhe des verpressbaren Materials in dem Formhohlraum steht und/oder dem Gewicht. Mittels einer grafischen Visualisierung kann angezeigt werden, wie sich eine Veränderung eines der Steuerungsparameter in dem herzustellenden Pressling bemerkbar macht.

Die stattfindenden Bewegungsabläufe der definierten Komponenten, insbesondere der Stempeleinrichtung 3a, 3b, kann in die einzelnen Prozessstufen unterteilt grafisch dargestellt werden. So können die Bewegungen der Stempeleinrichtungen 3a, 3b in der Startposition, beim Befüllen, Einführen in den Formhohlraum 14, dem Pulvertransfer ohne Presskrafteinwirkung, beim Verpressen, bei Presskraftentlastung, Zurücksetzen und Freilegen dargestellt werden, sowie in einer Endposition beim Ende des Presszyklus.

In einem folgenden Schritt erfolgt eine Übertragung des generierten und eventuell korrigierten Steuerprogramms auf eine numerische Steuereinrichtung der Mehrplatten-Pulverpresse 100.

Das Steuerprogramm wird dann derart ausgeführt, dass ein masshaltiger Pressling in der Mehrplatten-Pulverpresse hergestellt wird.

## Patentansprüche

1. Mehrplatten-Pulverpresse (100) zur Herstellung eines masshaltigen Presslings aus einem verpressbaren Material, einfüllbar in eine Matrize, mit
- einer Stempeleinrichtung (3), umfassend eine Vielzahl in axialer und rotativer Richtung relativ zueinander verstellbarer Stempel (6) und Komponenten, welche relativ zu einem Pressenteil verstellbar ist,
- einer Antriebseinheit zum Verstellen der Stempeleinrichtung (3) und/oder der relativ zueinander verstellbaren Stempel (6) und Komponenten in und/oder entgegen einer Pressrichtung, und
- eine numerische Steuereinrichtung, die eingerichtet und programmierbar ist, um gemäss eines Steuerprogramms einen Bewegungsablauf der Stempeleinrichtung (3) und/oder der relativ zueinander verstellbaren Stempel (6) und Komponenten zu steuern,
**dadurch gekennzeichnet, dass**
ein Steuerbefehlseingabeelement zur Eingabe von Steuerungsparametern und ein Anzeigeelement vorgesehen sind, um die Stempeleinrichtung (3) und/oder die relativ zueinander verstellbaren Stempel (6) und Komponenten sowie Bewegungsabläufe auf grafische Weise darzustellen.

2. Mehrplatten-Pulverpresse (100) gemäss Anspruch 1, **dadurch gekennzeichnet, dass** das Steuerbefehlseingabeelement eine Tastatur ist und das Anzeigeelement ein Bildschirm ist.

3. Mehrplatten-Pulverpresse (100) gemäss Anspruch 1 oder 2, **dadurch gekennzeichnet, dass** das Steuerbefehlseingabeelement und das Anzeigeelement ein Touchscreen oder ein Smartphone sind.

4. Mehrplatten-Pulverpresse (100) gemäss einem der vorhergehenden Ansprüche, **dadurch gekennzeichnet, dass** Steuerungsparameter in das Steuerbefehlseingabeelement während eines Pressvorgangs für einen nachfolgenden Pressvorgang eingebbar sind.

5. Mehrplatten-Pulverpresse (100) gemäss einem der vorhergehenden Ansprüche, **dadurch gekennzeichnet, dass** ein Element zur drahtlosen Übertragung des Steuerprogramms an die numerische Steuereinrichtung vorgesehen ist.

6. Mehrplatten-Pulverpresse (100) gemäss einem der vorhergehenden Ansprüche, **dadurch gekennzeichnet, dass** die numerische Steuereinrichtung eingerichtet ist, um ein Steuerprogramm zum Steuern der Stempeleinrichtung (3) und/oder der relativ zueinander verstellbaren Stempel (6) und Komponenten auszuführen.

7. Verfahren zur Steuerung einer Mehrplatten-Pulverpresse (100) gemäss einem der Ansprüche 1 bis 6, umfassend
- Definieren einer Anzahl von relativ zueinander verstellbarer Stempel (6) und Komponenten, umfassend mindestens Matrize (2) und Festanschläge (9), welche in einem Presszyklus in mehreren Prozessstufen zur Herstellung eines mehrstufigen Presslings bewegt werden;
- Eingabe von Steuerungsparametern;
- Erzeugung eines Steuerprogramms, das eine Reihe von Steuerbefehlen umfasst, wobei jeder Befehl einer Bewegung der definierten Komponenten entspricht;
- Analyse der Steuerbefehle des erzeugten Steuerprogramms und Durchführen von Berechnungen der Bewegung der definierten Komponenten, um die Bewegungsabläufe in den einzelnen Prozessstufen der definierten Komponenten zu bestimmen, wobei diese grafisch angezeigt werden,
- Übertragung des Steuerprogramms auf eine numerische Steuereinrichtung und
- Ausführung des Steuerprogramms durch die numerische Steuereinrichtung zur Herstellung eines masshaltigen Presslings,
**dadurch gekennzeichnet, dass** die Analyse der Steuerbefehle, die Realisierung der Berechnung der Bewegung der definierten Komponenten und die Anzeige der Bewegungsabläufe in Echtzeit ausgeführt werden und dadurch, dass die grafische Anzeige eine realitätsgenaue schematische Darstellung ist.

8. Verfahren zur Steuerung gemäss Anspruch 7, **dadurch gekennzeichnet, dass** die Stempeleinrichtung (3) in einzelnen Prozessstufen des Pressvorgangs grafisch angezeigt wird, welche Startposition (10), Befüllung und Einführung (20), Pulvertransfer (30) zunächst ohne Presskrafteinwirkung, Verpressung (40), Presskraftentlastung (50), Zurücksetzen und/oder Freilegen (60) und/oder Ende des Presszyklus entsprechen.

9. Verfahren zur Steuerung gemäss Anspruch 7 oder 8, **dadurch gekennzeichnet, dass** mit einem generierten Steuerprogramm eine Simulation durchführbar ist.

10. Verfahren zur Steuerung gemäss Anspruch 9, **dadurch gekennzeichnet, dass** an einem mit der Simulation hergestellten Pressling geometrische und/oder physikalische Parameter bestimmt werden, welche als Ist-Werte mit vorher definierten Soll-Werten verglichen werden, wobei das Verfahren eingerichtet ist, um aus dem Vergleich neue Steuerungsparameter zu generieren.

11. Verfahren zur Steuerung gemäss Anspruch 10, **dadurch gekennzeichnet, dass** einer der bestimmbaren Ist-Werte eine Dichteverteilung in dem hergestellten Pressling ist.
